# EUROPÄISCHE PATENTANMELDUNG

(11) **EP 1 167 795 A1**
(43) Veröffentlichungstag der Anmeldung: **02.01.2002**
(21) Anmeldenummer: 00810571.0
(22) Anmeldetag: 30.06.2000
(51) Int. Cl.: F16D 1/072

(54) **Drehmoment-formteil**

(71) Anmelder: Pantec Holding AG, 2545 Selzach (CH)
(72) Erfinder: Wolf, Erwin, 71554 Weissach (DE)
(74) Vertreter: Roshardt, Werner Alfred, Dipl.-Phys.

(57) **Zusammenfassung**

Ein Formteil (1) zur Übertragung von Drehmomenten weist mindestens ein Kopplungsabschnitt (7) auf, welcher mit einer kopplungswirksamen Kontur versehen ist. Zur Verbesserung der Übertragung des Drehmoments vom Kunststoff-Element (3) auf die Welle (2) ist das Formteil (1) im Bereich der kopplungswirksamen Kontur verformungstechnisch aufgeweitet.

## Beschreibung

### Technisches Gebiet

Die Erfindung betrifft ein Formteil zur Übertragung eines Drehmoments mit mindestens einem Kopplungsabschnitt, an welchem eine kopplungswirksame Kontur ausgebildet ist. Weiter bezieht sich die Erfindung auf ein Verfahren und eine Vorrichtung zur Herstellung eines solchen Formteils.

### Stand der Technik

Formteile werden seit langem zur Übertragung eines Drehmoments benutzt. Aufgrund des Einsatzgebiets und des zu übertragenden Drehmoments werden die Formteile entsprechend dimensioniert. Ein wichtiges Einsatzgebiet solcher Formteile findet sich in der Automobilbranche und dort beispielsweise als Drehmomentenwelle für den Antrieb von Scheibenwischern.

Einerseits muss die Zulieferindustrie beispielsweise der Automobilbranche sich den ihr zugestandenen Platzverhältnissen für die von ihnen gelieferten Geräte anpassen. Anderseits werden heutzutage oft auch die einzelnen Bestandteile solcher Geräte von mehreren spezialisierten Betrieben hergestellt. Um einen produktionstechnisch optimalen Verfahrensablauf bei der Herstellung beispielsweise eines Scheibenwischermotors zu gewährleisten, müssen allfällige Änderungen derart berücksichtigt werden, dass deren Einfluss auf die einzelnen Bestandteile des Geräts auf ein Minimum beschränkt wird. Damit für die beteiligten Betriebe eine Planung der einzelnen Arbeitsschritte vereinfacht werden konnte, hat man sich auf gewisse Normen (z. B. DIN-Norm, eigene Normen der Betriebe etc.) geeinigt. Steigen die Anforderungen an das zu übertragende Drehmoment eines bestehenden Scheibenwischermotors, so führt dies zu konstruktiv aufwändigen und damit kostenintensiven Überarbeitungen.

Weiter wird die Grösse des übertragbaren Drehmoments und auch anderer wirkender Kräfte, welche an einem Formteil angreifen einerseits durch die Festigkeitseigenschaften der verwendeten Materialien und anderseits durch die Art der Verbindung der Bestandteile des Formteils bestimmt. Werden Materialien mit erhöhten Festigkeitseigenschaften verwendet, hat dies insbesondere auf der Kostenseite unerwünschte Auswirkungen (z. B. Material, Werkzeug etc.).

Die bekannten Formteile genügen vor allem bei erhöhten Drehmomenten nicht den Anforderungen, welche die Industrie bei der Produktion von grossen Stückzahlen in produktionstechnischer Hinsicht an ein solches Formteil stellt.

### Darstellung der Erfindung

Aufgabe der Erfindung ist es, ein Formteil zur Übertragung von Drehmomenten zu schaffen, welches grösstmögliche Drehmomente übertragen kann und kostengünstig herstellbar ist.

Die Lösung der Aufgabe ist durch die Merkmale des Anspruchs 1 definiert. Gemäss der Erfindung weist ein Formteil der eingangs genannten Art mindestens einen verformungstechnisch aufgeweiteten Kopplungsabschnitt auf. An diesem Kopplungsabschnitt ist auch eine kopplungswirksame Kontur ausgebildet.

Durch diese Massnahme wird die Oberfläche zur Übertragung des Drehmoments, welches an dem Formteil angreift, vergrössert. Dies führt zu einer Erhöhung des maximal übertragbaren Drehmoments bei Beibehaltung der übrigen, konstruktiv und/oder herstellungstechnisch bedingten Abmessungen. Die Grösse der Aufweitung ist durch die Festigkeitseigenschaften des verwendeten Materials des Formteils und dem zu übertragenden Drehmoments abhängig. Wird ein Formteil beispielsweise aus Metall hergestellt, liegt die Vergrösserung des Durchmessers vorzugsweise bei etwa 20%. Mit einer solchen verformungstechnischen Aufweitung kann ein grösseres Drehmoment als bei einer nicht aufgeweiteten Ausführung übertragen werden. Der Unterschied kann durchaus bei etwa 30% liegen.

Durch die Ausführung werden zwei massgebliche Randbedingungen erfüllt, welche an ein Formteil gestellt werden. Einerseits überträgt das Formteil langlebig das jeweils anfallende Drehmoment und anderseits ist das Formteil produktionstechnisch einfach (insbesondere mit geringem Materialverlust) und somit insbesondere bei grossen Stückzahlen kostengünstig herstellbar.

Damit der Kopplungsabschnitt einfach und gut reproduzierbar verformungstechnisch aufgeweitet werden kann, weist dieser eine axiale Ausnehmung auf. Dabei handelt es sich vorzugsweise um eine Bohrung, in welcher ein Mittel zur Aufweitung des Kopplungsabschnitts eindringen kann und so die Verformung des Kopplungsabschnitts erstellt. Je nach Art und Ausgestaltung des Mittels zur Aufweitung des Kopplungsabschnitts kann auch auf eine axiale Ausnehmung verzichtet werden. Eine lokale axiale Stauchung wird nämlich zwangsläufig zu einem lokal vergrösserten Durchmesser führen.

Die Art der kopplungswirksamen Kontur kann einen wesentlichen Einfluss auf die Fähigkeit zur Übertragung der Drehmomente haben. Die Kontur soll eine Abweichung von einer glatten zylindrischen Form darstellen. Bevorzugt ist eine Rändelung (auch Riffelung genannt - englisch: "knurling" bzw. "knurl"), welche eine Verzahnung, d. h. eine formschlüssige Verbindung mit einem angeformten zweiten Bestandteil (z. B. einen Kunststoffformteil), schaffen kann. Es sind aber auch nockenartige, eckige oder sonstige Konstruktionen möglich. In der DIN-Norm sind verschiedene Ausbildungen von Rändelungen definiert. Neben einer einfachen, in einer Bearbeitungsstation eines Rundschalttellers kostengünstig herstellbaren Rändelung wird beispielsweise auch eine (aufwändigere) Rändelung mit einer Kerbverzahnung normiert. Rändelungen mit Kerbverzahnung führen zu bevorzugten Eigenschaften einer formschlüssigen Verbindung, sind jedoch sehr werkzeugintensiv. Des Weiteren muss eine solche Rändelung in der Regel auf einer speziellen Maschine erstellt werden, was sich durch den dadurch bedingten Maschinenwechsel produktionstechnisch und kostenmässig negativ auswirkt.

Durch die Kombination der Ausbildung der Kontur und der verformungstechnischen Aufweitung des Kopplungsabschnitts ist es möglich, höhere Drehmomente auch mit einer Rändelung nach DIN-Norm, welche in einer Bearbeitungsstation eines Rundschalttellers herstellbar ist, zu übertragen. Dies führt insbesondere produktionstechnisch zu einer kostengünstigen und massgeblichen Verbesserung der geforderten Eigenschaften.

Aus welchem Material das Formteil hergestellt ist, hängt von der Anwendung ab. Typischerweise werden ein Stahl oder ein sonstiges geeignetes Metall verwendet. Je nach den Randbedingungen kann das Formteil auch aus anderen plastisch verformbaren Materialien hergestellt werden. Bevorzugt wird jedoch zumindest für den Kopplungsabschnitt Metall verwendet.

Die Festigkeitseigenschaften des verwendeten Materials müssen trotz der vorgenommenen Aufweitung erhalten bleiben. Bei der bevorzugten Verwendung von metallischem Ausgangsmaterial kann dieses am Ende der Bearbeitung bei Bedarf auch noch gehärtet werden. Eine solche Härtung erfolgt vorzugsweise mit bekannten Verfahren, wie sie aus der Metallverarbeitung bekannt sind.

Damit ein Drehmoment beispielsweise vom Scheibenwischermotor an den Scheibenwischer übertragen werden kann, ist das Formteil derart ausgestaltet, dass es gelagert werden kann. Das Formteil weist einen rotationssymmetrischen Lagerungsabschnitt auf, welcher vorzugsweise im Wesentlichen zylindrisch ausgebildet ist und in zumindest einer Lagerungsbüchse gehalten werden kann, welche beispielsweise im Gehäuse des Scheibenwischermotors angeordnet ist.

Das Formteil besteht vorzugsweise zumindest aus einem ersten Teil, welcher das Drehmoment überträgt, und einem zweiten Teil, welcher eine angreifende Kraft auf den ersten Teil überträgt. In der bevorzugten Ausführung des ersten Teils mit einem metallischen Ausgangsmaterial ist an dem Kopplungsabschnitt ein Element aus Kunststoff aufgespritzt. Durch den im flüssigen Zustand aufgespritzten Kunststoff entsteht - verstärkt durch die Rändelung am Kopplungsabschnitt - eine formschlüssige, drehmomentübertragende und belastbare Verbindung. Neben der bevorzugten Ausführung mit einem aufgespritzten Kunststoff-Element kann beispielsweise auch ein Element aus Aluminiumdruckguss an dem Kopplungsabschnitt aufgepresst werden.

Der Rohling, aus welchem der Formteil hergestellt wird, ist vorzugsweise ein zylindrisches Ausgangsprodukt (Halbfabrikat), z. B. ein Metallstab. Aus diesem wird in mehreren Bearbeitungsschritten (Fräsen, Schleifen, Verformen etc.) das gewünschte Endprodukt gewonnen. Produktionstechnisch ist es von Vorteil, wenn es sich um ein stangenförmiges Ausgangsmaterial mit einer eckigen oder runden Querschnittform handelt. Von diesen kann der Rohling durch Abtrennen eines Elementes der gewünschten Länge je nach Kundenwunsch gewonnen werden.

Zur Schaffung der Aufweitung wird der Kopplungsabschnitt erwärmt und danach mittels eines Presswerkzeugs aufgeweitet. Die Erwärmung kann mit verschiedenen bereits bekannten Verfahren erfolgen. Bei Verwendung eines metallischen Ausgangsmaterials wird dafür bevorzugt ein auf Induktion basierendes Verfahren gewählt. Das verwendete Presswerkzeug wird vorzugsweise stempelartig ausgebildet und hat beispielsweise eine dornartige bzw. eine kegelförmige Spitze, welche in den aufgeheizten Kopplungsabschnitt eindringt. Durch Festlegung der Eindringtiefe und der Ausgestaltung des Presswerkzeugs wird die Form und Grösse der Aufweitung bestimmt.

Vor der Erwärmung wird an der Oberfläche des Kopplungsabschnitts bei Bedarf eine Rändelung angebracht und eine axiale Ausnehmung vorgesehen. Wie bereits weiter oben erwähnt wurde, kann die Art der Rändelung nach produktionstechnischen und den produktespezifischen Vorgaben verschiedenartig ausgebildet werden. Bei der axialen Ausnehmung handelt es sich vorzugsweise um eine Bohrung, welche ihrerseits eine Bohrtiefe und einen Bohrdurchmesser im Kopplungsabschnitt aufweist, die vorzugsweise der Ausgestaltung des Presswerkzeugs entsprechen. Wenn das Presswerkzeug entsprechend ausgebildet wird und die Eigenschaften des verwendeten Materials für den Kopplungsabschnitt es erlauben, kann gegebenenfalls auf eine vor der Penetration des Presswerkzeugs erstellte axiale Ausnehmung verzichtet werden.

Die Vorrichtung zum Herstellen eines solchen Formteils ist dadurch gekennzeichnet, dass sie zumindest erste Mittel zum Erwärmen und zweite Mittel zum verformungstechnischen Aufweiten des Kopplungsabschnittes hat. Die ersten Mittel umfassen vorzugsweise eine induktive Heizung.

Besonders bevorzugt für die Herstellung des Formteils aus einem metallischen Ausgangsmaterial wird eine aus der Metallverarbeitung bekannte Rundschaltteller-Vorrichtung. Mit einer solchen Maschine, welche mehrere Bearbeitungsstationen für diverse Arbeitsschritte aufweist, sind grosse Stückzahlen in kürzester Zeit herstellbar. Um einen Drehteller, auf welchem mehrere Werkstücke gleichzeitig eingespannt sind, sind mehrere Bearbeitungsstationen bevorzugt in regelmässigen Abständen kreisförmig zum Zentrum ausgerichtet angeordnet. Eine der Bearbeitungsstationen bringt beispielsweise an dem Formteil eine axiale Bohrung in dem Kopplungsabschnitt an. Eine weitere Bearbeitungsstation kann die Aufweitung der Bohrung anbringen. Die übrige Bearbeitung des Formteils wird mit nicht näher zu beschreibenden weiteren Bearbeitungsstationen ausgeführt. Die Reihenfolge der einzelnen Arbeitsschritte vom Halbfertigprodukt bis zum fertigen Formteil ist produktionstechnisch bedingt und kann entsprechend den Umständen variieren.

Selbstverständlich können auch andere Maschinen für die Herstellung verwendet werden (wie z.B. sog. Einspindel- oder Mehrspindel-Maschinen). Es kann auch sinnvoll sein, nur einen Teil der Verfahrensschritte mit einer Rundschaltteller-Maschine auszuführen und ansonsten getrennte (z.B. mit einem automatischen Transportmechanismus untereinander verbundene) Bearbeitungsstationen einzusetzen. Wird auf den aufgeweiteten Abschnitt ein Kunststoff-Element aufgebracht, erfolgt dies in der Regel an einem anderen Ort (z.B. im Kunststoff-Spritzwerk).

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Ansicht des erfindungsgemässen Formteils für einen Scheibenwischermotor,
- Fig. 2a-e: Schnittdarstellungen des Kopplungsabschnitts in einzelnen, ausgewählten Verfahrensschritten, und
- Fig. 3: eine schematische Darstellung der Vorrichtung mit einem Rundschaltteller.

Grundsätzlich sind in den Figuren gleiche Teile mit gleichen Bezugszeichen versehen.

### Wege zur Ausführung der Erfindung

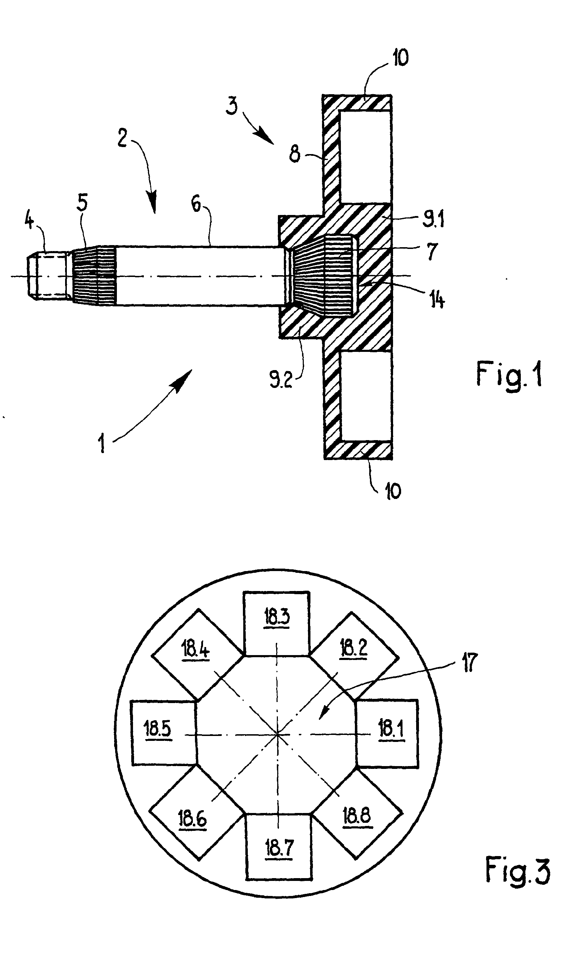

Fig. 1 zeigt eine Ansicht des erfindungsgemässen Formteils 1 wie es beispielsweise für Scheibenwischermotoren in der Automobilindustrie verwendet wird. Die gemachten Grössenangaben beziehen sich auf das Ausführungsbeispiel. Je nach Einsatzgebiet eines solchen Formteils können diese um das Mehrfache zu den hier ausgeführten Angaben variieren. Dasselbe gilt auch für die beschriebenen Ausgestaltungen der Formen.

Das Formteil 1 besteht aus einer metallischen Welle 2 und aus einem aufgespritzten Kunststoff-Element 3 (z.B. ein Zahnrad), das hier in einer angedeutet geschnittenen Ansicht dargestellt ist. Die in diesem Ausführungsbeispiel beschriebene kreiszylindrische Welle 2 ist aus einem auf die gewünschte Länge abgetrennten Rundstahl (beispielsweise der Qualität ETG 100) hergestellt und weist mehrere Abschnitte mit unterschiedlichen Aufgaben auf. Von links, bezogen auf die Figur 1, ist als Erstes ein Befestigungsabschnitt mit einem Gewinde 4 zur Aufnahme einer Kurbel mit Befestigungsmutter (hier nicht dargestellt) ausgebildet. Die Dimensionen des Gewindes 4 sind von dem Anschluss der verwendeten Scheibenwischerkonstruktion abhängig, welche in den meisten Fällen einer genormten Grösse entspricht. Diese Normierung kann eine offizielle Norm, wie z. B. die DIN-Norm oder eine von einem Hersteller der Automobil- oder Zulieferbranche bestimmte Norm, sein. Grundsätzlich ist dieses Gewinde 4 jedoch im Durchmesser kleiner als der Durchmesser des Lagerungsabschnitts 6 der Welle 2 ausgebildet.

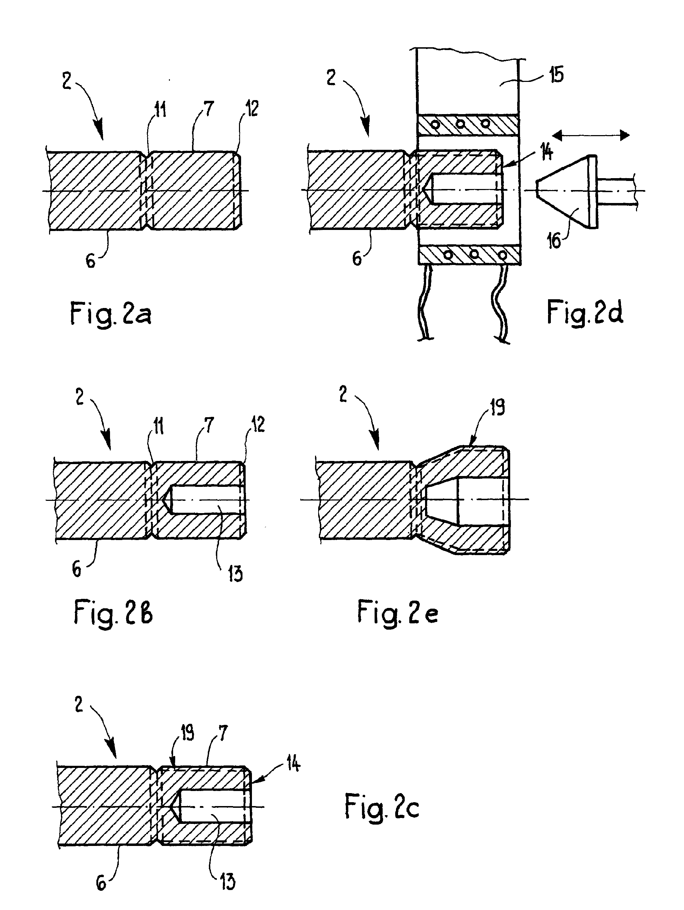

Die montierte Kurbel für den Scheibenwischerarm wird z.B. mit einer Mutter fixiert. Anschliessend an den Befestigungsabschnitt findet sich ein Übergangsabschnitt 5, welcher den Übergang vom Gewinde 4 zum Lagerungsabschnitt 6 in Form eines Kegelstumpfes bildet. Zur Übertragung des Drehmomentes von der Welle 2 an den Scheibenwischerarm und umgekehrt weist die Oberfläche des Übergangsabschnitt 5 eine Rändelung auf. Je nach Drehmoment, das übertragen werden soll, können verschiedene Arten von Rändelungen ausgebildet werden. Vorzugsweise wird eine solche in einer Bearbeitungsstation eines Rundschalttellers 17 (Fig. 2) angebracht.

In diesem Ausführungsbeispiel weist der Lagerungsabschnitt 6 einen Durchmesser von z. B. 10 mm auf. Die entsprechend ausgebildete Lagerungsbuchse (hier nicht dargestellt) führt die Welle 2 und ist auf den Durchmesser des Lagerungsabschnitts 6 abgestimmt. Sämtliche Dimensionen sind in der Regel durch den Verwendungszweck und die dadurch bedingte Konstruktion des Formteils vorgegeben. Dabei können sowohl zu beachtende Platzverhältnisse als auch geforderte Drehmomente eine Rolle spielen. Dies betrifft auch die Länge der einzelnen Abschnitte der Welle 2 und des Kunststoff-Elements 3. Anschliessend an den Lagerungsabschnitt ist der Kopplungsabschnitt 7 ausgebildet. Infolge der verformungstechnischen Aufweitung bildet auch der Kopplungsabschnitt 7 bzw. ein Teil davon etwa die Form eines Kegelstumpfs. Im Rahmen der Erfindung wird angestrebt, dass ein möglichst langer Abschnitt (in axialer Richtung) maximale Aussenabmessungen hat. D.h. der Kopplungsabschnitt 7 soll einen kurzen konischen Teil und einen langen (zumindest näherungsweise) zylindrischen ("geraden") Teil haben. (Selbstverständlich soll die Aussenseite des zylindrischen Teils konturiert sein für einen guten Formschluss und soll nicht glatt sein.)

Im Gegensatz zu dem Übergangsabschnitt 5 weist der kleinere Aussendurchmesser des Kegelstumpfs vorzugsweise den gleichen Durchmesser wie der Durchmesser des Lagerungsabschnitts 6 auf. Der grössere Aussendurchmesser des Kegelstumpfs beträgt etwa 12 mm und ist somit etwa 20% gegenüber dem Durchmesser des Lagerungsabschnitts 6 aufgeweitet. Der Kopplungsabschnitt 7 weist in diesem Ausführungsbeispiel eine axiale Ausnehmung auf, welche produktionstechnisch vorteilhaft ist und entsprechend dem Presswerkzeug, welches im Verfahren verwendet wird, ausgebildet ist. Die Oberfläche des Kopplungsabschnitts 7 ist gerändelt. Die Ausführung der Rändelung des Kopplungsabschnitts 7 kann entsprechend der Oberfläche des Übergangsabschnitt 5 gerändelt sein oder auch anders ausgebildet sein. Die Wahl der Art der Rändelung ist auch hier von den zu übertragenden Drehmomenten abhängig. Wie bei dem Übergangsabschnitt 5 ist es produktionstechnisch vorteilhaft, wenn die Rändelung in einer Bearbeitungsstation des Rundschalttellers ausgeführt werden kann. An der Stirnseite des aufgeweiteten Kopplungsabschnitts 7 bildet sich infolge des verdrängten Materials ein Kreisring. Dieser weist eine Dicke zwischen dem Aussen- und Innendurchmesser auf, welche der Wandstärke der Aufweitung entspricht. Die Oberfläche dieses Kreisrings kann zusätzlich gerändelt werden, was den Formschluss zwischen der Welle 2 und dem Kunststoff-Element 3 verbessert. Diese Rändelung kann, muss aber nicht auf die Rändelung der Oberfläche der Aufweitung abgestimmt sein.

Das Kunststoff-Element 3 wird in eine Werkzeugform gespritzt, in welcher die Welle 2 mit dem Kopplungsabschnitt 7 eingesetzt ist. Die Form des Kunststoff-Elements 3 hängt von den konstruktiven Gegebenheiten (d. h. vom verwendungsspezifischen Zweck) ab. In diesem Ausführungsbeispiel ist das Kunststoff-Element 3 im Wesentlichen als Kreisscheibe 8 (z.B. Zahnrad) mit einem massiven Kern 9 und einer umlaufenden Randverstärkung 10 ausgebildet. Der Kern 9 umfasst den Kopplungsabschnitt 7 der Welle 2 vorzugsweise derart, dass er eine kreiszylindrische Form aufweist. Der Kern 9 lässt sich in einen Teil 9.1, welcher von der Stirnseite aus gesehen bis zur Kreisscheibe 8 reicht, und in einen Teil 9.2, welcher von der Kreisscheibe 8 aus noch einen kleinen Teil des Lagerungsabschnitts 6 umfasst. Vorzugsweise dringt der Kunststoff auch in die Ausnehmung des Kopplungsabschnitts 7 ein. Der Durchmesser des Kernteils 9.1 entspricht etwa dem doppelten Durchmesser der Welle 2. In diesem Beispiel beträgt der Durchmesser des Kerns ca. 20 mm. In der vorliegenden Ausführungsform wurde der Durchmesser des Kernteils 9.2 um etwa 10% gegenüber dem Durchmesser des Kerns 9.1 reduziert, da ab der Kreisscheibe 8 bis zu dem Beginn des Lagerungsabschnitts 6 die wirkenden Kräfte im Vergleich zum Bereich des Kopplungsabschnitts 7, insbesondere gegenüber den Kräften, welche an seiner Stirnseite wirken, kleiner sind. Die daraus resultierende Materialeinsparung hat im Bezug auf die grossen Stückzahlen positive Auswirkungen. Die Wandstärke der Randverstärkung 10 entspricht etwa der Dicke der Kreisscheibe 8.

Die einzelnen Schritte des Verfahrens zur Herstellung des aufgeweiteten Kopplungsabschnitts 7 der Welle 2 werden in den Figuren 2a-f schematisch anhand von Schnittdarstellungen des Kopplungsabschnitts 7 gezeigt. Es werden hauptsächlich nur die Verfahrensschritte beschrieben, welche im Zusammenhang mit der Aufweitung stehen. Auf eine Beschreibung der Verfahrensschritte zur Herstellung beispielsweise des Gewindes 4 und des Übergangsabschnitts 5 wird hier verzichtet.

Fig. 2a zeigt das Ende der Welle 2 an dem der Kopplungsabschnitt 7 ausgebildet ist. Zur Begrenzung der Abschnitte 6 und 7 wird beispielsweise eine umlaufende Nut 11 erstellt. Am Ende der Welle 2 bzw. des Kopplungsabschnitts 7 wird eine Abfasung 12 angeordnet.

In einem weiteren Verfahrensschritt wird eine axiale Ausnehmung in Form einer Bohrung 13 erstellt, wie in Fig. 2b dargestellt. Die Bohrtiefe und der Bohrdurchmesser sind von der gewünschten Grösse der Ausweitung und des verwendeten Presswerkzeugs 16 abhängig. In diesem Beispiel entspricht die Bohrtiefe etwa der Länge des Kopplungsabschnitts 7. Der Bohrdurchmesser beträgt etwa 5 mm, was etwa der Hälfte des Aussendurchmessers im unverformten Zustand entspricht.

Im nächsten Schritt (Fig. 2c) wird an dem Kopplungsabschnitt eine Rändelung 19 angebracht. Da durch die Ausgestaltung des Kopplungsabschnitts 7 eine massgebliche Verbesserung zur Übertragung von Drehmomenten erreicht wird, kann anstelle einer werkzeugintensiven Kerbverzahnung eine einfache DIN-Norm-Rändelung angebracht werden. Eine solche kann in der Regel in einer Bearbeitungsstation eines Rundschalttellers erstellt werden und ist produktionstechnisch bevorzugt. Sind besondere Randbedingungen oder spezielle Kundenwünsche vorhanden, kann diese Rändelung in der Art einer Kerbverzahnung hergestellt werden. Dies führt zu einer zusätzlichen Verbesserung der Übertragung von Drehmomenten. Eine solche Rändelung muss in der Regel jedoch auf einer separaten Maschine erstellt werden. Da jeder Maschinenwechsel zu einer wesentlichen Verlängerung der Produktionszeit führt, sind diese mit Mehrkosten verbunden. Neben der Rändelung der Oberfläche des Kopplungsabschnitts ist auch die Stirnseite 14 mit einer einfach ausgebildeten Rändelung versehen. Aus verfahrenstechnischen Gründen ist diese nicht auf die Rändelung der Oberfläche des Kopplungsabschnitts 7 ausgerichtet.

In einer weiteren Bearbeitungsstation wird über den Kopplungsabschnitt 7 temporär ein Mittel zur Erwärmung angeordnet (Fig. 2d). Die Erwärmung dieses Abschnitts 7 erfolgt vorzugsweise induktiv mit Induktionsschlaufen, welche den Kopplungsabschnitt ringförmig umfassen. (In Fig. 2d sind die Induktionsdrahtwicklung und die Zuführdrähte schematisch angedeutet.) Sobald die erforderliche Temperatur erreicht ist, wird der Stempel 16 mit Kraft eingeführt. Die vor der Penetration zu erreichende Temperatur ist von dem verwendeten Ausgangsmaterial des Kopplungsabschnitts 7 abhängig und liegt z.B. für einen zähen Stahl der Qualität ETG 100 im Bereich von 800° C. Die Form des Stempels 16 hängt einerseits von der gewünschten Grösse der Aufweitung und andererseits von den Materialeigenschaften des Kopplungsabschnitts 7 ab. Vorzugsweise wird das Erwärmen und das Aufweiten von der gleichen Bearbeitungsstation durchgeführt, damit der Zeitunterschied zwischen den beiden Arbeitsgängen und folglich auch der Temperaturverlust des aufgeheizten Abschnitts 7 minimal ist. Während der Penetration durch den Stempel 16 kann eine Negativform den Kopplungsabschnitt 7 derart umgreifen, dass die Ausdehnung des Kopplungsabschnitts 7 in diesem Bereich begrenzt wird.

Damit die Langlebigkeit der Welle 2 gewährleistet ist, darf sie keinerlei Risse infolge der verformungstechnischen Aufweitung im Material aufweisen. Deshalb ist es wichtig, dass die Erwärmungstemperatur einerseits nicht zu hoch ist (damit der Stahl nicht seine innere Struktur verändert) und andererseits nicht zu niedrig ist (damit die Dehnbarkeit nicht zu gering ist), was die maximale Begrenzung der Grösse der Aufweitung zusätzlich bestimmt.
Fig. 2e zeigt die fertig erstellte Aufweitung.

In Fig. 3 ist schematisch eine Vorrichtung mit einem Rundschaltteller 17 dargestellt. An diesem sind beispielhaft acht verschiedene Bearbeitungsstationen 18.1, ..., 18.8 angeordnet. Eine dieser Bearbeitungsstationen erstellt beispielsweise die Nut 11 und die Abfasung 12, eine andere die axiale Bohrung 13, an einer weiteren Bearbeitungsstation wird über den Kopplungsabschnitt 7 eine Vorrichtung 15 geschoben, welche den Kopplungsabschnitt 7 mittels Induktionsschlaufen erwärmt. An der gleichen Bearbeitungsstation erfolgt das Einstossen des Stempels 16 in den Kopplungsabschnitt 7. An den anderen Bearbeitungsstationen werden die übrigen Verfahrensschritte durchgeführt, welche zur Herstellung der Welle 2 nötig sind. Die Anordnung der Bearbeitungsstationen und der Ablauf der einzelnen Herstellungsschritte sind produktionstechnisch bedingt und können je nach Betrieb variieren.

Häufig ist es erforderlich, die Welle 2 nach der Fertigstellung zu schleifen, um z.B. die nötige Oberflächengüte zu erreichen. Das Schleifen findet zumeist auf einer nicht am Rundschaltteller angeordneten, separaten Bearbeitungsstation statt. Das erfindungsgemässe Aufweiten kann in einem solchen Fall durchaus auch nach dem Schleifen stattfinden. Der Schleifvorgang kann dadurch vermieden werden, dass bereits geschliffene Rohlinge bearbeitet werden.

Die beschriebenen Ausführungsbeispiele können vielfältig abgewandelt werden. Die Bohrung, in welche der Aufweitungsstempel gestossen wird, braucht nicht zylindrisch zu sein. Sie kann z.B. auch leicht konisch sein. Die Form des Stempels ist so gewählt, dass die gewünschte Form in einer möglichst schonenden Weise aufgeweitet wird. Die Aufweitung des Endes des Werkstückes kann unterschiedliche Formen haben. Statt einer kombinierten konisch-zylindrischen Form ist z.B. auch eine rein konische Form möglich. Denkbar sind auch tonnenförmig gewölbte Formen. Handelt es sich nicht um eine Welle für eine Scheibenwischerkonstruktion, werden die Abschnitte entsprechend der anderen Zweckbestimmung anders auszubilden sein.

Auch die Maschine kann anders ausgeführt sein. Die Erwärmung und die Aufweitung mit dem Stempel kann in zwei benachbarten aber eigenständigen Bearbeitungsstationen erfolgen. Ebenso ist es möglich, die erfindungsgemässe Bearbeitung nicht am Rundschaltteller, sondern an einer anderen Maschine vorzunehmen.

Zusammenfassend ist festzustellen, dass ein Formteil 1 zur Übertragung insbesondere von Drehmomenten geschaffen wurde, welches konstruktive und kundenspezifische Wünsche berücksichtigen kann, ohne dass bestehende Konstruktionen wesentlich verändert werden müssen. Dies vor allem, wenn in einer bestehenden Konstruktion derartige Änderungen in den Kräfteverhältnissen erfolgen, die innerhalb der ursprünglichen Abmessungen übernommen werden müssen. Weiter können Formteile zur Übertragung von Drehmomenten hergestellt werden, die gegenüber heutigen Ausführungen bei gleichen Randbedingungen wesentlich geringere Abmessungen aufweisen.

## Patentansprüche

1. Formteil zum Übertragen eines Drehmoments mit mindestens einem Kopplungsabschnitt (7), an welchem eine kopplungswirksame Kontur ausgebildet ist, **dadurch gekennzeichnet, dass** der Formteil (1) im Bereich der kopplungswirksamen Kontur verformungstechnisch aufgeweitet ist.

2. Formteil nach Anspruch 1, **dadurch gekennzeichnet, dass** er im Bereich des Kopplungsabschnittes (7) eine axiale Ausnehmung (13) aufweist.

3. Formteil nach einem der Ansprüche 1 oder 2, **dadurch gekennzeichnet, dass** die kopplungswirksame Kontur eine Rändelung ist.

4. Formteil nach einem der Ansprüche 1 bis 3, **dadurch gekennzeichnet, dass** zumindest der Kopplungsabschnitt (7) metallisch ist.

5. Formteil nach einem der Ansprüche 1 bis 4, **dadurch gekennzeichnet, dass** der Kopplungsabschnitt (7) gehärtet ist.

6. Formteil nach einem der Ansprüche 1 bis 4, **dadurch gekennzeichnet, dass** er einen vorzugsweise zylindrischen Lagerungsabschnitt (6) aufweist.

7. Formteil nach einem der Ansprüche 1 bis 6, **dadurch gekennzeichnet, dass** er ein am Kopplungsabschnitt (7) aufgespritztes Kunststoff-Element (3) aufweist.

8. Verfahren zum Herstellen eines Formteils (1) zum Übertragen eines Drehmoments mit mindestens einem Kopplungsabschnitt (7), wobei eine kopplungswirksame Kontur ausgebildet wird, **dadurch gekennzeichnet, dass** der Formteil (1) im Bereich der kopplungswirksamen Kontur verformungstechnisch aufgeweitet wird.

9. Verfahren nach Anspruch 8, **dadurch gekennzeichnet, dass** als Ausgangsmaterial für die Welle (2) ein metallisches Material verwendet wird.

10. Verfahren nach einem der Ansprüche 8 oder 9, **dadurch gekennzeichnet, dass** beim verformungstechnischen Aufweiten des Kopplungsabschnitts (7) zunächst insbesondere induktiv aufgeheizt wird und danach mit einem Presswerkzeug (16) aufgeweitet wird.

11. Verfahren nach einem der Ansprüche 8 bis 10, **dadurch gekennzeichnet, dass** vorgängig eine Rändelung und eine axiale Bohrung (13) angebracht werden.

12. Vorrichtung zum Herstellen eines Formteils (1) zum Übertragen eines Drehmoments, **gekennzeichnet durch** Mittel zum induktiven Erwärmen (15) und Mittel (16) zum verformungstechnischen Aufweiten des Kopplungsabschnitts (7).

13. Vorrichtung nach Anspruch 12, **dadurch gekennzeichnet, dass** sie einen Rundschaltteller (17) mit mehreren Bearbeitungsstationen aufweist, wobei eine der Bearbeitungsstationen insbesondere zum Anbringen einer axialen Bohrung (13) ausgebildet ist.
